# EUROPEAN PATENT APPLICATION

(11) **EP 2 503 496 A1**
(43) Date of publication of application: **26.09.2012**
(21) Application number: 12154067.8
(22) Date of filing: 06.02.2012
(51) Int. Cl.: G06Q 20/16, G06Q 20/32

(54) **Method of controlling system and mobile device for processing payment and data**

(30) Priority: 24.03.2011 KR 20110026304; 23.11.2011 KR 20110122804
(71) Applicant: Danal Co., Ltd., Seongnam-si 463-875 (KR)
(72) Inventor: Cho, Jung Min, Seoul 138-220 (KR); Ha, Young Bin, Seongnam-si 461-832 (KR); Seo, Jun O, Yongin-si 448-511 (KR)
(74) Representative: Goeden, Christian

(57) **Abstract**

A method of processing data for paying for at least one of item in a system having a Payment Gateway server and a mobile device is disclosed. Herein, the method includes steps of downloading an application by using address information in a memory of the mobile device, wherein the application is used to process at least one of a barcode, comparing first phone number with second phone number in the mobile device, wherein the first phone number is inputted by a user of the mobile device and the second phone number is stored in the Universal Subscriber Identity Module (USIM) of the mobile device, transmitting user information stored in the USIM of the mobile device to the PG server if the first phone number is identical with the second phone number, generating ID information for the user in the PG server, wherein the ID information is stored in a database of the PG server, transmitting the generated ID information from the PG server to the mobile device, transmitting first barcode from the PG server to the mobile device if the mobile device requests a barcode to the PG server, wherein the first barcode is mapped with first payment method, displaying, in the mobile device, first data for indicating at least one of company providing a discount coupon and second data for indicating at least one of item from a specific company among the at least one of company, transmitting request signal for second barcode from the mobile device to the PG server if a specific item is selected by the user of the mobile device, and transmitting the second barcode from the PG server to the mobile device, wherein the second barcode includes discount information related to the selected specific item.

## Description

This application claims the benefit of Korean Patent Application No. 10-2011-0026304, filed on March 24, 2011 and claims the benefit of Korean Patent Application No. 10-2011-0122804, filed on November 23, 2011. The foregoing applications are incorporated by reference herein in their entireties.

### Field of the Invention

The present invention relates to a technology associated with electronic transactions and, more particularly, to a system, mobile device, and payment gateway (PG) server for processing payment information using information identification system such as an integrated barcode. Also, according to an embodiment of the present invention, the present invention is also designed to be applicable to a near field communication (NFC) environment. More specifically, the scope of the present invention may also be applied in embodiments of smartphones that are designed to be capable of performing data communication between two or more separate devices by a simple touch of the finger, instead of using the integrated barcode described in the description of the present invention. For example, the above-described devices correspond to mobile phones, barcode readers, point of sales (POS) terminals, personal computers, and so on.

### Discussion of the Related Art

With the recent development in the technology, due to the worldwide distribution of Internet services, electronic financial transactions are more actively carried out. Examples of electronic financial transactions include Internet banking (or online banking), cyber banking (or virtual banking), and so on. Herein, Internet banking (or online banking) refers to online banking services enabling users to perform banking services from their homes, offices, and so on, via Internet. Furthermore, the term Internet banking (or online banking) and cyber banking (or virtual banking) may be interchangeably used.

Additionally, as a more detailed example, mobile phones may be used as the main device for the above-described electronic financial services. However, the related art mobile phones that are used for carrying out electronic transactions have the following disadvantages.

First of all, even when a user seeks to carry out an online payment of a small amount of money by using his or her mobile phone (i.e., a small sum mobile payment), it is imperative that an Short Message Service (SMS) texting service is preceded. Therefore, the SMS texting service itself causes an increase in the service cost, and the user experiences the inconvenience of having to input a certification number each time the user seeks to make payment.

Moreover, recently, payment services made for purchasing only a specific or designated product by using "Gifticons" (also referred to as Gift Icons) have been provided. However, such payment services are disadvantageous in that the payment is limited to a one-time-only payment. Furthermore, the Gifticon payment service has a critical limitation in that the payment is designed to be performed manually by the user after receiving the Gifticon from another party.

Furthermore, the related art mobile payment system (or payment system using the mobile phone) is disadvantageous in that the system security is not user-friendly and goes against the user convenience.

Due to the above-described multiple disadvantages, electronic transactions, during which the user makes online or offline payments by using his or her mobile device, are not actively carried out as expected.

### Description of the invention

### Objectives of the invention

Accordingly, the present invention is directed to a method of controlling a system and mobile device for processing payment using information identification system such as an integrate barcode that substantially obviates one or more problems due to limitations and disadvantages of the related art.

Another object of the present invention is to provide a mobile device equipped with an integrate barcode so as to resolve the above-described disadvantages of the present invention.

Another object of the present invention is to map all payment means selectable by the user by using the integrated barcode.

Another object of the present invention is to provide a system that can allow the user to semi-permanently carry out payment for a wide range of items by using the integrated barcode.

A further object of the present invention is to define and provide a system protocol that can enhance user convenience by using the integrated barcode and that can, at the same time, improve system security.

Further, another object of the present invention is to provide a mobile device and an application that can overcome the problems with the discount coupon of the convention system, such as generating the list for discount coupon automatically and define protocols defining such system.

### Solutions for the Objectives

To achieve these objects and other advantages and in accordance with the purpose of the invention, as embodied and broadly described herein, in a method of controlling a system for processing payment information using an integrated barcode, the method of controlling the system includes the steps of transmitting a request signal requesting an application for generating integrated barcodes to be downloaded, from a mobile device to a payment gateway (PG) server, transmitting access information enabling the application for generating integrated barcodes to be downloaded, from the PG server to the mobile device, having the mobile device download the application for generating integrated barcodes by using the received access information, having the mobile device, which has downloaded the application, compare a phone number of a mobile device inputted by a user with a phone number stored in a universal subscriber identity module (USIM) of the mobile device, when the two numbers are identical, having the mobile device transmit user information stored in the USIM to the PG server, having the PG server generate a unique number for generating an integrated barcode based upon a phone number, user information, and a unique serial number assigned when generating the corresponding application, which are stored in the USIM, transmitting the generated unique number from the PG server to the mobile device, and if the unique number is successfully received by and stored in the mobile device, having the PG server confirm and store the unique number.

In another aspect of the present invention, in a method of controlling a mobile device for processing payment information using an integrated barcode, the method of controlling the mobile device includes the steps of downloading an application for generating integrated barcodes, receiving a unique number for generating an integrated barcode from a payment gateway (PG) server, if log-in information for mapping the integrated barcode to a payment means is valid, transmitting the received unique number to the PG server, if the transmitted unique number is valid, displaying an on-screen display (OSD) listing at least one or more payment means that are to be mapped to the integrated barcode, transmitting information on a specific payment means selected from the listed at least one or more payment means to the PG server, receiving data indicating an integrated barcode that is mapped to the specific payment means from the PG server, using the received data indicating the integrated barcode, so as to perform control operations enabling payment on a first item to be performed at a first point of purchase, and using the same received data indicating the integrated barcode, so as to perform control operations enabling payment on a second item to be performed at a second point of purchase.

It is to be understood that both the foregoing general description and the following detailed description of the present invention are exemplary and explanatory and are intended to provide further explanation of the invention as claimed.

### Effects of the invention

The method of controlling a system and mobile device for processing payment information using an information identification system such as an integrated barcode according to the present invention has the following advantages. According to an embodiment of the present invention, a mobile device equipped with an integrated barcode is provided. The integrated barcode is available for both on-line and off-line payments. And, the usage of the integrated barcode may essentially eliminate the cost required for providing SMS transmission services, which are used when making Internet (or on-line) payments.

Also, according to another embodiment of the present invention, by using the integrated barcode so as to map all types of payment means selectable by the user, the user is no longer required to separately carry his or her credit cards, gift certificates, and so on. Moreover, according to yet another embodiment of the present invention, since a wide range of items can be semi-permanently purchased by using the integrated barcode, electronic transactions may become more active, thereby contributing to the development of the industry. Furthermore, according to yet another embodiment of the present invention, by using the integrated barcode, a protocol that can enhance user convenience and, at the same time, improve system security may be specifically provided. Moreover, according to another embodiment of the present invention, the problem of not being able to use a prepaid discount coupon by mistake is resolved. More detailed effects of the invention will follow.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a general view showing an overall system for processing payment information using an integrated barcode according to an embodiment of the present invention;

FIG. 2 illustrates a flow chart showing a process of downloading an application for processing the integrated barcode according to an embodiment of the present invention;

FIG. 3 illustrates a flow chart showing a process of mapping the integrated barcode to a payment means according to an embodiment of the present invention;

FIG. 4 illustrates a flow chart showing a process of carrying out an online payment by using the integrated barcode according to an embodiment of the present invention;

FIG. 5 illustrates a flow chart showing a process of carrying out an offline payment by using the integrated barcode according to an embodiment of the present invention;

FIG. 6 illustrates a flow chart showing a method for controlling a mobile device carrying out payment for purchasing multiple items using the integrated barcode according to an embodiment of the present invention;

FIG. 7a to FIG. 7e sequentially illustrate process steps performed by the mobile device for processing graphic data, which are required for the process of downloading an application that can process the integrated barcode, according to an embodiment of the present invention;

FIG. 8a to FIG. 8d sequentially illustrate process steps performed by the mobile device for processing graphic data, which are required for the process of mapping the integrated barcode to the respective payment means, according to an embodiment of the present invention;

FIG. 9a to FIG. 9e sequentially illustrate process steps performed by the mobile device for processing graphic data, which are required for the process of making an online payment, according to an embodiment of the present invention;

FIG. 10a to FIG. 10f sequentially illustrate process steps performed by the mobile device for processing graphic data, which are required for the process of making an offline payment, according to an embodiment of the present invention;

FIG. 11a to FIG. 11e respectively illustrate on-screen display (OSD) screens through which the mobile device processes information on payments made by using the integrated barcode according to an embodiment of the present invention;

FIG. 12 illustrates a database (DB) of the mobile device according to an embodiment of the present invention, wherein the DB stores histories of payment made by each payment means for each address;

FIG. 13 is a flowchart illustrating the process of generating a second barcode for discount coupon in the mobile device and PG server according to another embodiment of the present invention;

FIG. 14 is a flowchart illustrating the process of generating a second barcode for discount coupon according to another embodiment of the present invention;

FIG. 15 illustrates a block diagram of a mobile device configuration module in more detail according to another embodiment of the present invention;

FIG. 16 is a flowchart illustrating a control method of processing mobile device;

FIG. 17a to FIG. 17j illustrate Graphical User Interface (GUI)displaying second barcode for discount coupon of the mobile device according to another embodiment of the present invention;

FIG. 18 is a flowchart illustrating S1620 step of FIG. 16 in more detail according to another embodiment of the present invention;

FIG. 19 is a detailed illustration of the location information needed to implement the process of FIG. 18;

FIG. 20 illustrates a database including a list of specific companies needed to process the steps of FIG. 18;

FIG. 21 is a GUI illustration for implementing the embodiment of FIG. 18;

FIG. 22 illustrates a method of detecting the store location information of the mobile device according to the embodiment of the present invention; and

FIG. 23 illustrates GUI needed to implement the process of FIG. 22.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In the following description of the present invention, the suffixes "module" and "unit", which are mentioned in the elements used to describe the present invention, are merely used for the purpose of simplifying the description of the present invention. Therefore, the suffixes "module" and "unit" may also be alternately used for the reference of a specific element of the present invention.

Moreover, although the embodiments of the present invention will hereinafter be described with reference to the accompanying drawings and the details illustrated in the drawings, the present invention will not be limited only to the embodiments presented and described herein.

Furthermore, although the terms used in the present invention are selected from generally known and used terms, the terms used herein may be varied or modified in accordance with the intentions or practice of anyone skilled in the art, or along with the advent of a new technology. Alternatively, in some particular cases, some of the terms mentioned in the description of the present invention may be selected by the applicant at his or her discretion, the detailed meanings of which are described in relevant parts of the description herein. Furthermore, it is required that the present invention is understood, not simply by the actual terms used but by the meaning of each term lying within.

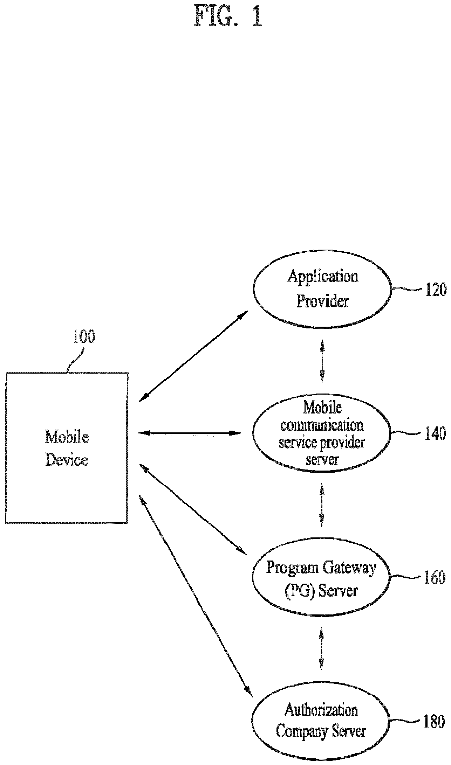

FIG. 1 illustrates a general view showing an overall system for processing payment information using an integrated barcode according to an embodiment of the present invention. Hereinafter, elements configuring the system for processing payment information using the integrated barcode will now be described in detail with reference to FIG. 1.

As shown in FIG. 1, the system according to the embodiment of the present invention includes a mobile device 100, an application provider 120, a mobile communication service provider server 140, a payment gateway (PG) server 160, and an authorization company server 180. However, the present invention will not be limited only to the structure and elements shown in FIG. 1. It will be apparent that the scope of the present invention should be decided in accordance with the appended claims of the present invention. Furthermore, examples of the authorization company service 180 may include the servers of credit card companies, gift certificate management companies, banks, and so on.

The mobile device 100 transmits a request signal to download an application for generating integrated barcodes to the payment gateway (PG) server 160. The PG server 160 then transmits access information allowing the application for generating integrated barcodes to be downloaded to the mobile device 100. Herein, for example, the access information may correspond to a uniform resource locator (URL) address. The mobile device 100 uses the access information to download the application for generating integrated barcodes from the application provider 120. Herein, examples of the application provider 120 may include Android market, App Store, Ovi Store, and so on.

After downloading the application, the mobile device 100 compares the phone number of the mobile device, which has been inputted by the user, with the phone number stored in a universal subscriber identity module (USIM) of the mobile device 100. Then, in case the two phone numbers are identical, the mobile device 100 transmits user information stored in the USIM to the PG server 160.

Meanwhile, the PG server 160 generates a unique number for generating the integrated barcode based upon the phone number, the user information, and a unique serial number assigned when generating the application, which are stored in the USIM of the mobile device 100. The generated unique number is transmitted to the mobile device 100 from the PG server 160. And, in case the unique number is successfully received and stored in the mobile device 100, the PG server 160 is designed to confirm and store the received unique number.

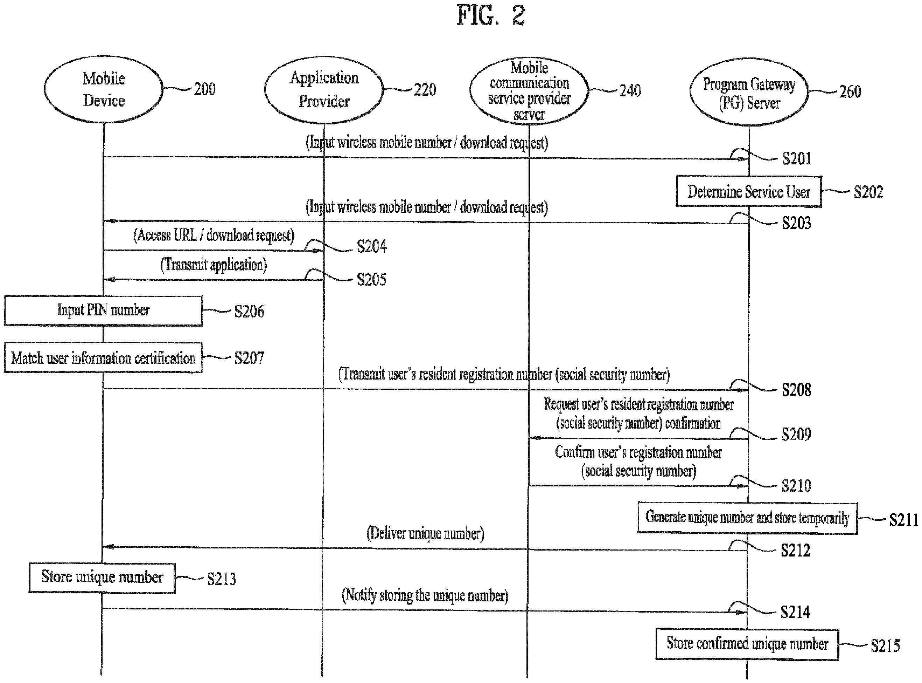

As described above, the description of FIG. 1 corresponds to a general introduction of the process of downloading an application for processing an integrated barcode and for enhancing system security by using a unique number according to the embodiment of the present invention. A more detailed description of this method will be described later on with reference to FIG. 2.

Also, according to another embodiment of the present invention, the mobile device 100 receives log-in information for mapping the integrated barcode to a payment means from the user. The mobile device 100 transmits the unique number, which is pre-stored in the mobile device 100, to the PG server 160. Thereafter, in case the transmitted unique number is identical to the unique number, which has been confirmed and stored in the PG server 160, the PG server 160 transmits a response signal authorizing the application to be executed to the mobile device 100.

The mobile device 100 displays a list of at least one or more payment means that can be mapped to the integrated barcode, and, then, the mobile device 100 transmits information on a selected specific payment means to the PG server 160. Afterwards, the PG server 160 transmits data indicating the integrated barcode, which is mapped to the selected payment means, to the mobile device 100.

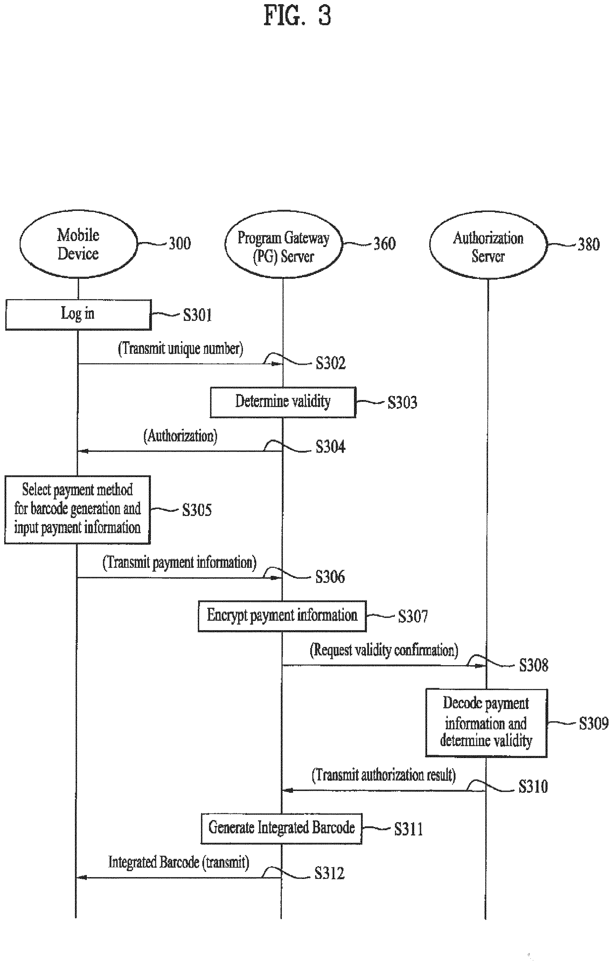

The description above corresponds to an introduction of a process of mapping the integrated barcode to a payment means according to the embodiment of the present invention. The mapping method will be described in more detail later on with reference to FIG. 3.

FIG. 2 illustrates a flow chart showing a process of downloading an application for processing the integrated barcode according to an embodiment of the present invention. Hereinafter, processes of downloading and installing an application for processing an integrated barcode according to the embodiment of the present invention will now be described in detail with reference to FIG. 2.

A request signal requesting for the download of the application for generating integrated barcodes is transmitted from the mobile device 200 to the PG server 260 (S201). At this point, the present invention may be designed so that the phone number of the mobile device 200 can be inputted at the same time. The PG server 260 uses the phone number received from step S201, so as to check whether or not the user of the mobile device 200 is a legitimate service user (S202). For example, the PG server 260 may determine whether or not the user is a legitimate service user by communicating with the mobile communication service provider server 240.

Thereafter, access information enabling the application for generating integrated barcodes to be downloaded is transmitted from the PG server 260 to the mobile device 200 (S203). Herein, for example, the access information corresponds to the URL address. Then, the mobile device 200 uses the access information so as to send a download request to a specific application provider 220 (S204). Subsequently, the mobile device 200 downloads the application for generating integrated barcodes from the specific application provider 220 (S205).

Most particularly, during the process of realizing steps S204 and S205, the mobile device may be connected to a mobile web when accessing the download URL, and the mobile web may determine an operating system (OS) of the mobile device. And, based upon the determined result, the present invention is designed so that the mobile device can access an open market respective to each OS. When the present invention is designed as described above, it will be advantageous in that the user is no longer required to personally search for the respective open market.

More specifically, for example, in case of a mobile device equipped with a first operating system (first OS), the mobile device accesses the URL address of a first server respective to the first OS, so as to download the application for generating the integrated barcode. Meanwhile, in case of a mobile device equipped with a second operating system (second OS), the mobile device accesses the URL address of a second server respective to the second OS, so as to download the application for generating the integrated barcode.

Furthermore, in case the application is downloaded in step S205, the user of the mobile device 200 inputs a PIN number (S206). However, the input of a PIN number is merely exemplary. And, therefore, depending upon the design made by the system designer, the present invention may also be designed so that personal information, such as the user's phone number, can be inputted, when required.

The mobile device 200 compares the phone number of the mobile device, which has been inputted by the user, with the phone number stored in a universal subscriber identity module (USIM) of the mobile device 200 (S207). Then, based upon the compared result, when it is determined that the two phone numbers are identical, the mobile device 200 transmits the user information stored in the USIM to the PG server 260 (S208). As shown in FIG. 2, the user information may correspond to the user's resident registration number.

The PG server 260 sends a request to the mobile communication service provider server 240 to verify whether or not the user's resident registration number is mapped to the user's phone number (S209). The mobile communication service provider server 240 sends a feedback of the verified result (S21 0), and the PG gateway 260 generates a unique number for generating the integrated barcode and temporarily stores the generated unique number (S211). Herein, for example, the unique number may be generated based upon the phone number, the user information, and the unique serial number given when generating the application for generating the integrated barcode, which are stored in the USIM of the mobile device 200.

Thereafter, the generated unique number is delivered to the mobile device 200 from the PG server 260 (S212), and the mobile device 200 stores the received unique number (S213). And, when such reception and storage of the unique number to the mobile device 200 is notified (S214), the PG server 260 also stores the confirmed unique number (S215).

According to the embodiment of the present invention shown in FIG. 2, since a primary user certification process is performed in step S202, and a secondary user certification process is performed in step 207, the security of the payment system according to the present invention is more reinforced than that of the conventional mobile payment system (or payment system using the mobile phone).

Furthermore, by generating a unique number using the user information pre-stored in the USIM, the number of the mobile phone itself, the S/N of the device or application, and by equally mapping the generated unique number to the PG server and the mobile device, the security of the payment system may be reinforced as compared to when the user uses an arbitrarily determined password.

FIG. 3 illustrates a flow chart showing a process of mapping the integrated barcode to a payment means according to an embodiment of the present invention. Hereinafter, the process of mapping the integrated barcode to the payment means and registering the mapped payment means according to the embodiment of the present invention will be described in detail with reference to FIG. 3. Furthermore, according to another embodiment of the present invention, the features of FIG. 3 may be realized by using the process steps of FIG. 2. For example, the process steps S201 to S215 of FIG. 2 may be followed by the process steps shown in FIG. 3, and such combination may be included in the scope of the present invention.

As shown in FIG. 3, the mobile device 300 receives log-in information for mapping the integrated barcode to the payment means (S301). Herein, the log-in information may include at least one a user ID and a password. In case the log-in information of step S301 is not valid, i.e., in case the received log-in information does not conform to (or match with) the predetermined log-in information, the mobile device 300 counts the number of unmatched attempts. Thereafter, when the counted number exceeds a predetermined reference value, the mobile device 300 deletes the pre-stored application and transmits data indicating that the corresponding application has been deleted to the PG server 360.

Meanwhile, in case the log-in information of step S301 is valid, the unique number stored in the mobile device 300 is transmitted from the mobile device 300 to the PG server 360. Since the unique number has already been described above, detailed description of the same will be omitted for simplicity.

The PG server 360 determines whether or not the transmitted unique number is identical to the unique number confirmed and stored in the PG server 360 (S303). In case the two unique numbers are identical, a response signal authorizing the application to be executed is transmitted from the PG server 360 to the mobile device 300 (S304). The mobile device 300 displays a list of at least one or more payment means that can be mapped to the integrated barcode and receives the related information (S305).

Subsequently, information on the selected specific payment means is transmitted from the mobile device 300 to the PG server 360 (S306). Herein, for example, the information on the selected specific payment means includes additional information required for carrying out payment by using the selected specific payment means. More specifically, for example, in case the selected specific payment means corresponds to a credit card, information, such as the credit card number, credit card password, and expiration data, is required.

The PG server 360 encrypts the payment information transmitted in step S306 (S307), and, then, the PG server 360 transmits data inquiring whether or not the inputted payment information is valid to the corresponding authorization company server 380 (S308). The corresponding authorization company server 380 decodes the encrypted payment information and determines the validity of the corresponding information (S309). Thereafter, the authorization company server 380 transmits the authorization result to the PG server 360 (S31 0).

Subsequently, the PG server 360 generates data indicating the integrated barcode that is mapped to the specific payment means (S311). Then, the PG server 360 transmits the generated data to the mobile device 300. Herein, for example, the present invention may be designed so that the generated data can include a barcode PIN number.

Meanwhile, although it is not shown in FIG. 3, after performing step S312, the mobile device 300 converts the data indicating the integrated barcode, which is mapped to the specific payment means, to a data format that can be read by a barcode reader. Thereafter, the mobile device 300 is designed to display the converted data format. When the above-described is designed as described above, the integrated barcode may be used semi-permanently for offline payments. And, by activating the barcode only when the user is required to use the barcode, unpredicted or unexpected payments can be prevented.

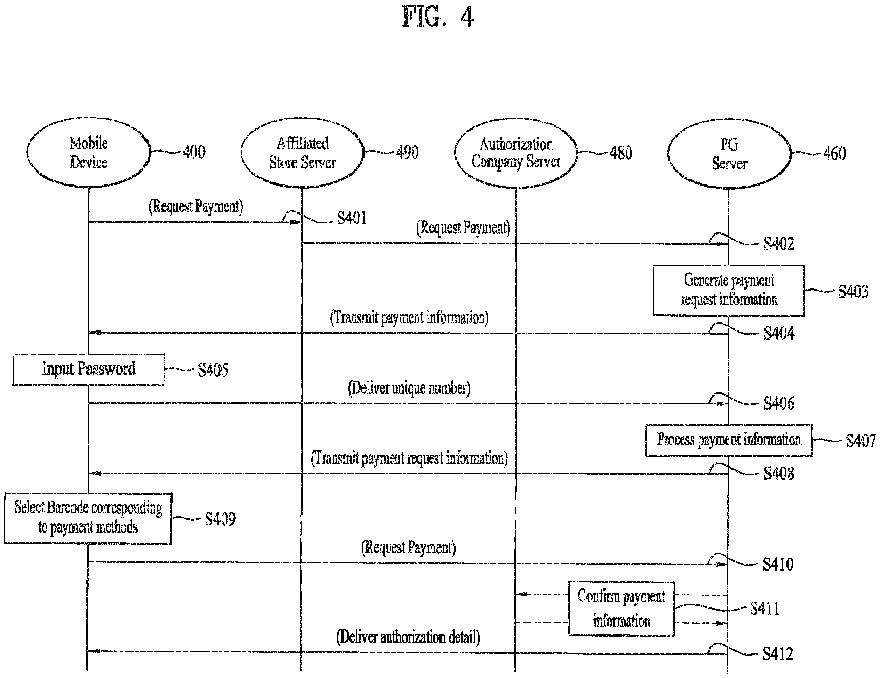

FIG. 4 illustrates a flow chart showing a process of carrying out an online payment by using the integrated barcode according to an embodiment of the present invention. Hereinafter, the process of carrying out an on-line payment for purchasing an arbitrary item by using the integrated barcode according to the embodiment of the present invention will be described in detail with reference to FIG. 4. However, according to another embodiment of the present invention, the process steps of FIG. 4 may be realized provided that the steps of FIG.2 and FIG. 3 are preceded. More specifically, the detailed description will now be made under the assumption that an application for processing the integrated barcode is downloaded, and that a specific payment means is mapped to the integrated barcode.

The mobile device 400, which is assumed to perform the process steps shown in FIG. 2 and FIG. 3, requests for payment to an affiliated store server 490 via on-line. The affiliated store server 490 sends a payment request signal to the PG server 460. At this point, for example, the payment request signal includes a mobile phone number, an affiliated store ID, purchase invoice number, and so on.

The PG server 460 then transmits the payment information to the mobile device 400, and the password is inputted by the user (S405). In case the inputted password is valid, the mobile device 400 sends the above-described unique number to the PG server 460. In case the transmitted unique number is valid, the PG server 460 processes the payment information (S407). Thereafter, the PG server 460 transmits detailed payment request information to the mobile device 400 (S408). For example, the detailed payment request information includes the name of the affiliated store, the name of the purchased product, the price, the available payment means, the transaction number, and so on.

At this point, the mobile device 400 selects a payment means, which is mapped to the integrated barcode (S409). Herein, it is assumed that the selected payment means is pre-mapped and stored by performing the process steps shown in FIG. 2 and FIG. 3. The mobile device 400 transmits data indicating that payment is requested to be made by using the specific payment means, which is selected in step S409, to the PG server 460 (S410). The PG server 460 verifies the payment information by communicating with an authorization company server 480 respective to the selected specific payment means (S411). Subsequently, the mobile device 400 transmits the authorization details to the mobile device 400 (S412).

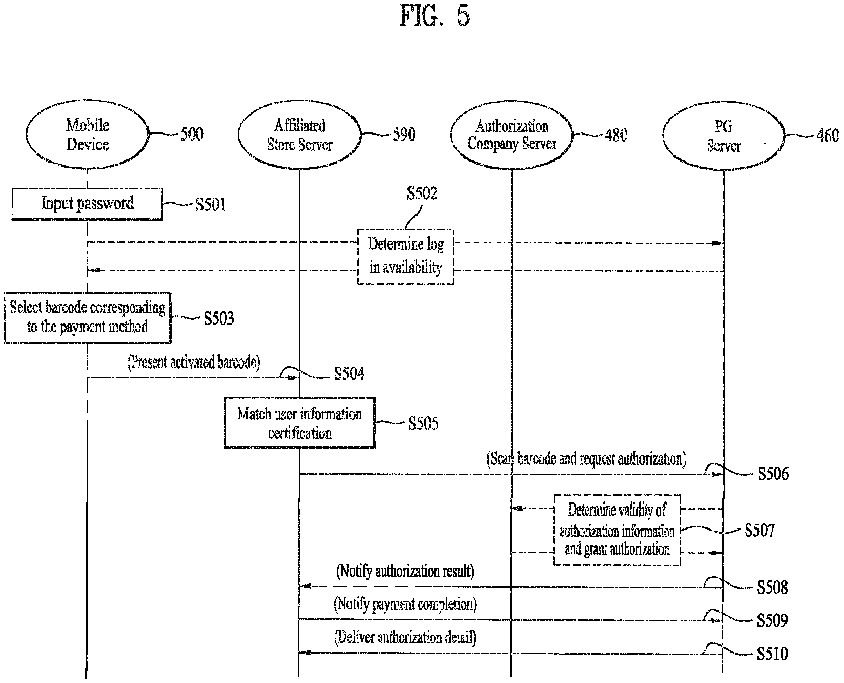

FIG. 5 illustrates a flow chart showing a process of carrying out an offline payment by using the integrated barcode according to an embodiment of the present invention. Hereinafter, the process of carrying out an off-line payment for purchasing an arbitrary item by using the integrated barcode according to the embodiment of the present invention will be described in detail with reference to FIG. 5. However, according to another embodiment of the present invention, the process steps of FIG. 5 may be realized provided that the steps of FIG. 2 and FIG. 3 are preceded. More specifically, the detailed description will now be made under the assumption that an application for processing the integrated barcode is downloaded, and that a specific payment means is mapped to the integrated barcode.

Prior to carrying out an off-line payment from an affiliated store, the mobile device 500, which is assumed to perform the process steps shown in FIG. 2 and FIG. 3, receives log-in information (e.g., password, etc.) from the user (S501). Then, in case the received log-in information is valid, the mobile device 500 communicates with the PG server 560 by using the above-described unique number, so as to carry out a certification process determining whether or not the mobile device 500 is a legitimate mobile device (S502).

Thereafter, the mobile device 500 displays a list of at least one or more payment means, which are mapped to the integrated barcode, so that a specific payment means can be selected (S503). At this point, the integrated barcode is displayed to be in an activated mode, and the displayed activated mode is presented (or shown) to a point of sales (POS) terminal 590 of the affiliated store (S504).

Once the certification of the user information is successfully performed (S505), the POS terminal 590 scans the integrated barcode and transmits a signal requesting authorization to the PG server 560 (S506). However, based upon any modification in the system design made by the system designer, step S505 may be omitted. The PG server 560 communications with an affiliated store server 580 respective to the selected specific payment means, so as to determine whether or not payment authorization can be granted (S507). Thereafter, the PG server 560 notifies whether or not the payment has been authorized to the POS terminal of the affiliated store (S508). Meanwhile, when the POS terminal 590 sends information on whether or not the payment process has been completed to the PG server 560 (S509), the PG server 560 sends the final authorization details to the mobile device 500 (S51 0).

Therefore, according to the embodiment of the present invention described with reference to FIG. 1 to FIG. 5, an application associated with the integrated barcode may be easily downloaded, and diverse payment means belonging to the user of the mobile device may be mapped to the downloaded application (or integrated barcode). Also, regardless of whether the payment is carried out on-line or off-line by using any one of the available payment means, since the payment process can be completed more quickly by using the password only once, electronic payment practice may become more active, and the user convenience may be enhanced. Furthermore, by performing a primary certification process between the affiliated store and the PG server, by performing a secondary certification process between the PG server and the mobile device, and by having the application within the mobile device perform a tertiary certification process on the mobile device using USIM information, the security of the payment system may also be highly reinforced.

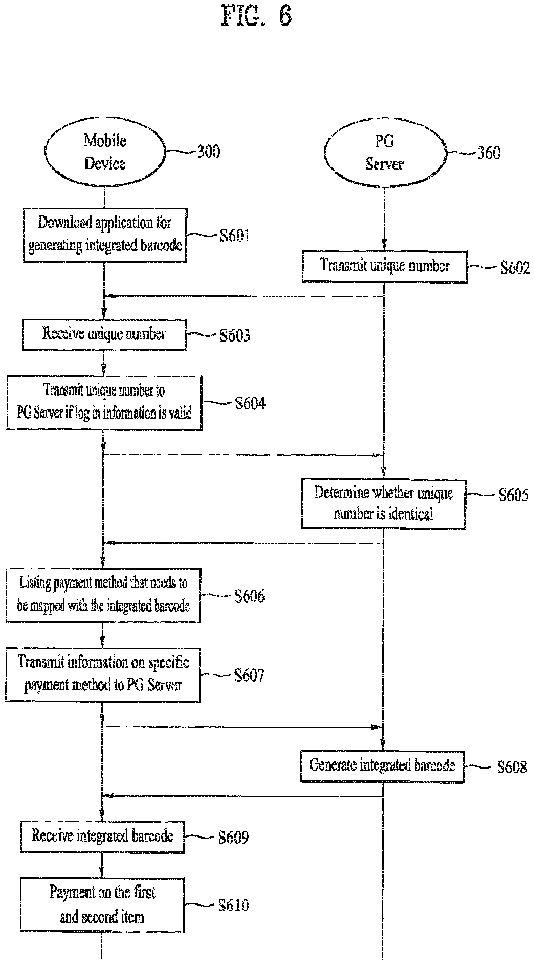

FIG. 6 illustrates a flow chart showing a method for controlling a mobile device carrying out payment for purchasing multiple items using the integrated barcode according to an embodiment of the present invention. Hereinafter, a method for controlling the mobile device that can carry out payment for all purchased items by activating the integrated barcode will now be described in detail with reference to FIG. 6. Furthermore, since the description of FIG. 6 may be supplemented by referring to the description of FIG. 1 to FIG. 5, the description of identical features of the present invention will be omitted for simplicity.

According to the embodiment of the present invention, the mobile device 600 for processing payment information using the integrated barcode downloads an application for generating integrated barcodes (S601). The PG server 660 transmits a unique number to the mobile device 600, and the mobile device 600 receives the unique number for generating the integrated barcode, which is transmitted from the PG server 660, and stores the received unique number (S603). Most particularly, as described above, the unique number corresponds to a key value pre-shared by the mobile device 600 and the PG server 660.

The mobile device 600 receives log-in information for mapping the integrated barcode to a payment means from the user, and, if the received log-in information is valid, the mobile device 600 transmits the received unique number to the PG server 660 (S604). The PG server 660 then determines whether or not the unique number transmitted in step S604 is identical to the unique number generated and transmitted in step S602 (S605).

In case the two unique numbers are identical, the mobile device 660 displays an on-screen display (OSD) screen listing at least one or more payment means that is/are to be mapped to the integrated barcode (S606). Then, among the at least one of the listed payment means, the mobile device 600 transmits information on a selected specific payment means to the PG server 660 (S607). The mobile device 600 receives data indicating the integrated barcode that is mapped to the specific payment means from the PG server (S609). More specifically, in this case, it is assumed that the data have been generated from the PG server 660 (S608).

The mobile device 600 uses the data indicating the integrated barcode, which is received in step 609, so as to perform control operations so that a payment on a first item can be carried out at a first point of purchase (or payment). Afterwards, the mobile device 600 uses data indicating the same integrated barcode, so as to perform control operations so that a payment on a second item can be carried out at a second point of payment (or purchase) (S610). More specifically, as opposed to the related art "gifticons" (or gift icons), which are assigned with barcodes that can be used only once, since the integrated barcode according to the embodiment of the present invention is mapped to the payment means itself, the integrated barcode according to the present invention is advantageous in that the integrated barcode can be used semi-permanently.

Additionally, according to another embodiment of the present invention, the mobile device 600 receiving the integrated barcode in step S609 may store image data corresponding to the integrated barcode. However, the present invention is designed so that the information inputted in step S607 (herein, when the specific payment means is a credit card, such information may correspond to the credit card number, the CVC number, the credit card password, etc.) is not stored. When the present invention is designed as described above, payment information associated with the user's credit card cannot be acquired by merely hacking the image data. Thus, leaking of personal information can be prevented.

Furthermore, according to yet another embodiment of the present invention, the present invention may be designed to carry out payment for purchasing at least 2 items by using the integrated barcode, which has been received in step S609. Alternatively, the present invention may also be designed to receive a new integrated barcode each time the user's log-in information is inputted in step S604. For example, when the user logs-in on January 1^{st}, 2010, by using the mobile device according to the present invention, a first integrated barcode is generated and displayed. Thereafter, a first payment process is performed by using the first integrated barcode. Also, when the user logs-in once again on January 2^{nd}, 2010, by using the mobile device according to the present invention, a second integrated barcode is generated and displayed. Thereafter, a second payment process is performed by using the second integrated barcode.

Meanwhile, the mobile device that has received the above-described integrated barcode is designated to have a timer, which is operated therein. For example, when the payment process is not completed during a predetermined period of time starting from a time point where the timer begins to operate, the integrated barcode is controlled to be automatically shifted to a disable mode. Additionally, the predetermined period of time may be automatically set up by the mobile device or may be arbitrarily set up by the user. When the present invention is designed as described above, unexpected exposure or leaking of the integrated barcode due to scanning functions of the mobile device or image capturing functions of other mobile devices may be prevented in advance.

As described above, for example, the unique number described in FIG. 6 may be configured of a combination of the phone number, user information, and a unique serial number assigned when generating the application, which are stored in the USIM of the mobile device. Accordingly, the mobile device may, for example, correspond to a mobile phone or smart phone having a USIM embedded therein. Moreover, step S601 may further include accessing a uniform resource locator (URL) of a first server respective to a first operating system (OS), in case of a mobile device equipped with the first operating system (OS), and accessing a uniform resource locator (URL) of a second server respective to a second operating system(OS), in case of a mobile device equipped with the second operating system (OS).

Also, according to another embodiment of the present invention, between step S609 and step S610, the method of controlling the mobile device further includes the steps of storing data indicating the integrated barcode, which is mapped to the specific payment system, in a memory, converting the data to a data format that can be read by a barcode reader, and displaying the converted data. When the present invention is designed as described above, and when payment is carried out off-line, the payment for the product can be carried out quickly by simply consecutively reading the barcode of the product and the integrated barcode of the mobile device according to the present invention.

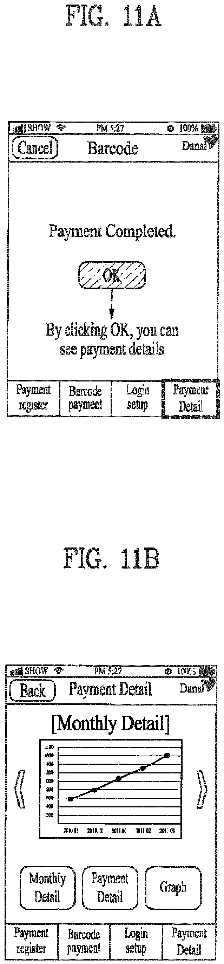

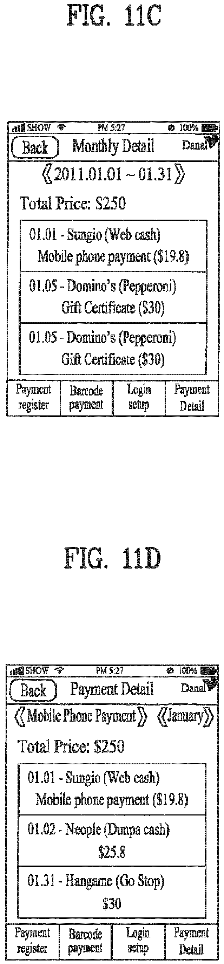

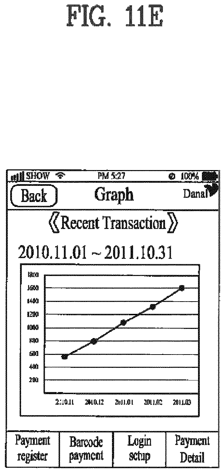

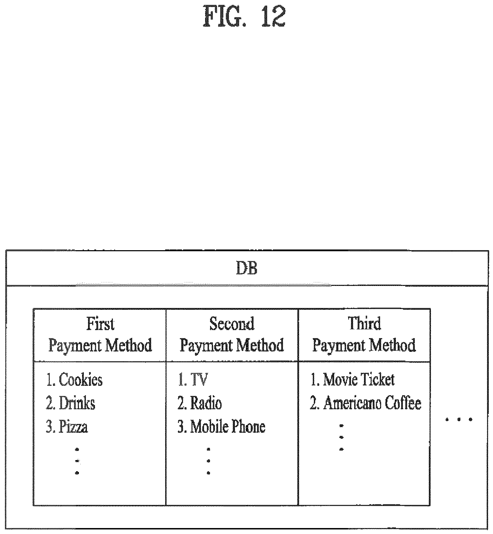

Furthermore, according to yet another embodiment of the present invention, after step S610, the method of controlling the mobile device further includes the steps of storing a first list configured to list items purchased and paid by using a first payment means in a first region of the memory, storing a second list configured to list items purchased and paid by using a second payment means in a second region of the memory, storing a third list configured to list items purchased and paid by using a third payment means in a third region of the memory, and displaying any one of the first list to third list depending upon the selected payment means. This process will be described in more detail later on with reference to FIG. 11 and FIG. 12.

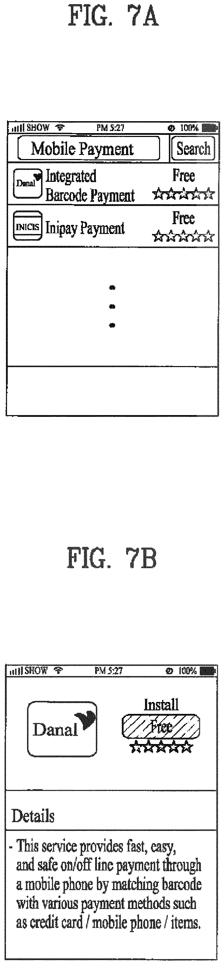

FIG. 7a to FIG. 7e sequentially illustrate process steps performed by the mobile device for processing graphic data, which are required for the process of downloading an application that can process the integrated barcode, according to the embodiment of the present invention. Hereinafter, a user interface for downloading an application for processing the integrated barcode will be described in detail with reference to FIG. 7a to FIG. 7e (and with supplemental reference to FIG. 2).

First of all, as shown in FIG. 7a, applications related to integrated barcode payment may be searched by using the mobile device according to the embodiment of the present invention. Then, as shown in FIG. 7b, the mobile device downloads an application related to integrated barcode payment. This is advantageous in that the user is not required to separately connect to and access a respective "App" store.

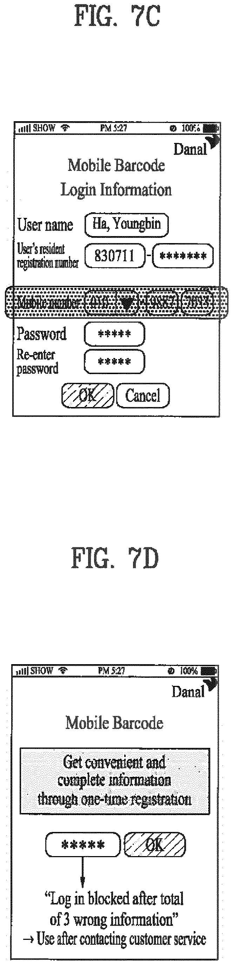

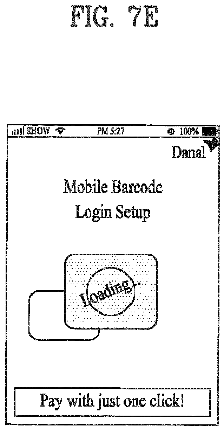

In case the application related to integrated barcode payment is downloaded, basic user information may be inputted, as shown in FIG. 7c. However, in case the mobile phone number inputted by the user does not match with (i.e., not identical to) the user information pre-stored in the USIM of the mobile device, the present invention is designed so that the payment process is no longer carried out. More specifically, an internal process for automatically certifying accuracy in the inputted phone number is added to the mobile device. When the mobile device according to the present invention is designed as described above, system security may be more reinforced by preventing a single user from repeatedly installing the corresponding application in another mobile device. As shown in FIG. 7d, when the password set up in FIG. 7c is identically inputted, the mobile device according to the embodiment of the present invention is designed to switch to an intro screen, as shown in FIG. 7e.

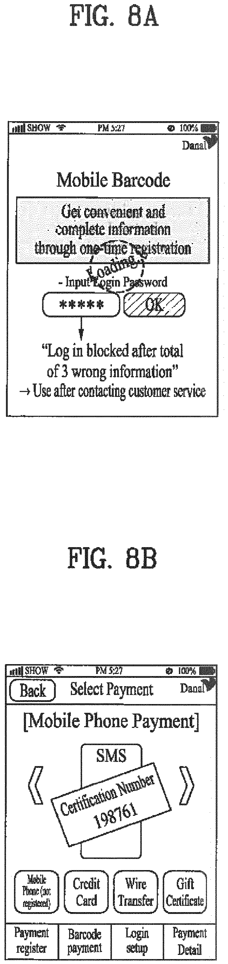

FIG. 8a to FIG. 8d sequentially illustrate process steps performed by the mobile device for processing graphic data, which are required for the process of mapping the integrated barcode to the respective payment means, according to the embodiment of the present invention. Hereinafter, a user interface for mapping the integrated barcode to a payment means will be described in detail with reference to FIG. 8a to FIG. 8d (and with supplemental reference to FIG. 3).

First of all, as shown in FIG. 8a, a first OSD screen requesting for a log-in password is displayed. In case a valid (or legitimate) log-in password is inputted, a second OSD screen listing at least one or more payment means (e.g., mobile phone, credit card, wire transfer, gift certificate, and so on) is displayed, as shown in FIG. 8b. Most particularly, as shown in FIG. 8b, the mobile device according to the embodiment of the present invention may also differentiate a group of registered payment means (i.e., credit card, wire transfer, gift certificate) from a group of unregistered ("not registered") payment means (i.e., mobile phone - not registered), and the differentiated groups of payment means may be displayed accordingly.

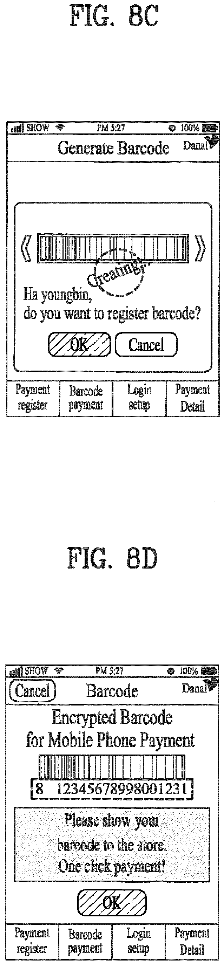

When the user selects an option for mapping a payment means to the integrated barcode for carrying out payment processes through the mobile phone, as shown in FIG. 8b, a third OSD screen inquiring whether or not to register the corresponding integrated barcode is displayed, as shown in FIG. 8c. Additionally, as shown in FIG. 8d, an image of a final integrated barcode is displayed. However, although the present invention is designed so that a PIN number of the barcode can also be exposed in FIG. 8d, a function of hiding the PIN number of the barcode may be set up in accordance with the user's preference or that of the system designer or manufacturer.

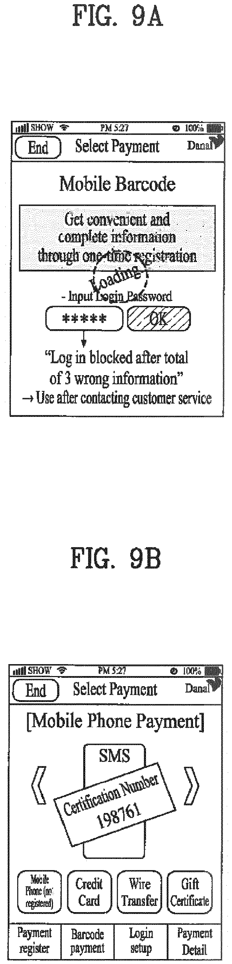

FIG. 9a to FIG. 9e sequentially illustrate process steps performed by the mobile device for processing graphic data, which are required for the process of making an online payment, according to the embodiment of the present invention. Hereinafter, a user interface for making an off-line payment for a specific item by using the integrated barcode will now be described in detail with reference to FIG. 9a to FIG. 9e (and with supplemental reference to FIG. 5). The following description will be made under the assumption that the user of the mobile device equipped with an integrated barcode visits an arbitrary off-line store.

When a user seeking to purchase an item in an off-line store executes an application related to the integrated barcode of the mobile device, a first OSD screen is displayed, as shown in FIG. 9a. At this point, the user input a log-in password, which he or she has set up in advance. Then, in case the inputted log-in password is valid, a second OSD screen for selecting the payment means is displayed, as shown in FIG. 9b. In FIG. 9b, it will be assumed that the mobile phone is selected as the payment means.

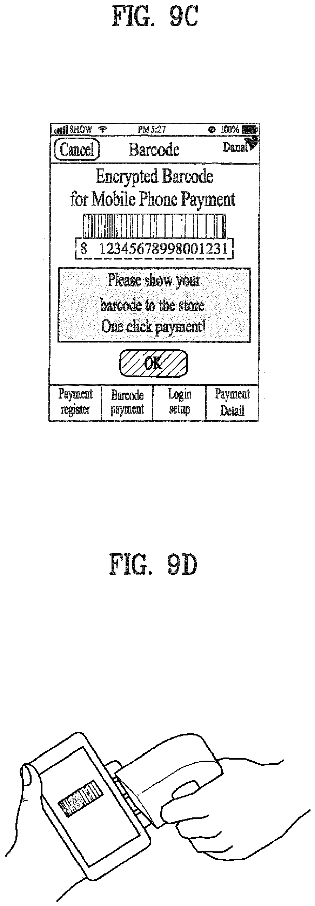

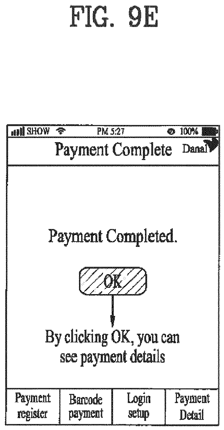

At this point, as shown in FIG. 9c, a mobile phone payment integrated barcode is displayed to be in an activated mode. In FIG. 9c, the displayed integrated barcode is scanned by a barcode reader installed in the off-line store, as shown in FIG. 9d. Thus, the payment process is successfully carried out. Thereafter, a third OSD screen displaying information indicating that a final authorization for the payment has been granted is outputted, as shown in FIG. 9e. Furthermore, the mobile device according to the embodiment of the present invention may be designed so that, in case the user clicks of an "OK" button in FIG. 9e, the detailed payment record is outputted in a second depth mode.

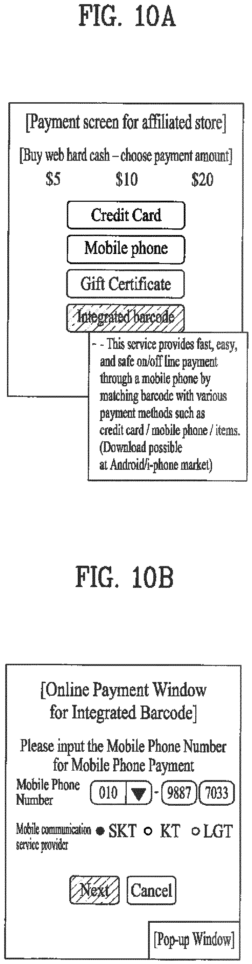

FIG. 10a to FIG. 10f sequentially illustrate process steps performed by the mobile device for processing graphic data, which are required for the process of making an offline payment, according to the embodiment of the present invention. Hereinafter, a user interface for making an on-line payment for a specific item by using the integrated barcode will now be described in detail with reference to FIG. 10a to FIG. 10f (and with supplemental reference to FIG. 4). First of all, the following description will be made under the assumption that the user uses the mobile device to access a specific website, so as to purchase a specific item from a specific affiliated on-line store.

As shown in FIG. 10a, various methods for carrying out the payment process are primarily displayed. Most particularly, in case the user selects an integrated barcode item located at the bottom of FIG. 10a, a screen for processing a primary certification process on the user is outputted, as shown in FIG. 10b. As described above, the mobile device equipped with an application related to the integrated barcode according to the embodiment of the present invention uses information pre-stored in a USIM. Thus, an arbitrary usage of the integrated barcode by an illegitimate user can be prevented in advance.

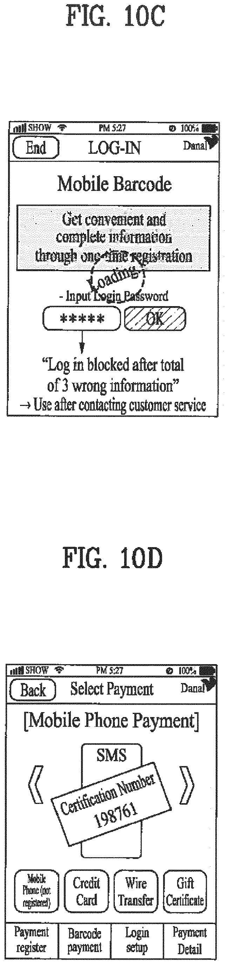

In case the mobile phone number inputted by the user is identical to the mobile phone number stored in the USIM, an input screen for inputting the log-in password is displayed, as shown in FIG. 10c. Thus, the secondary certification process on the user is carried out. Subsequently, in case the log-in password is valid, a screen for selecting a payment means is displayed, as shown in FIG. 10d. Although it is assumed in the example shown in FIG. 10d that the mobile phone is selected as the payment means, the present invention will not be limited only to the example proposed herein.

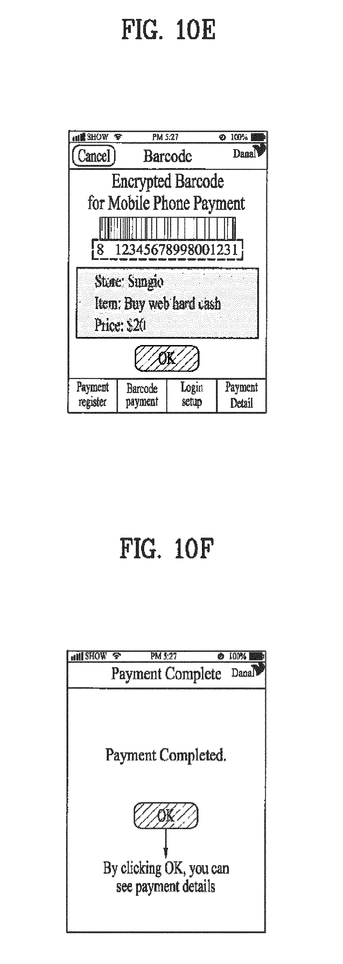

Then, after performing the process steps shown in FIG. 10d, without requiring the user to perform any other particular action, the mobile device according to the present invention is designed to notify the user that the payment for the purchased item has been successfully completed, as shown in FIG. 10e and FIG. 10f. The related art method was disadvantageous in that the user was required to input information related to the user's credit card each time a payment was to be made. However, when using the mobile device according to the embodiment of the present invention, the user is required to set up an integrated barcode respective to his or her credit card only once. Thereafter, the user may carry out payment processes without having to repeatedly input the credit card information.

Furthermore, FIG. 10e shows an example of an OSD screen displaying a barcode even when making an on-line payment. However, unlike in the off-line payment, the displayed OSD screen is optional. In case the OSD screen is configured for an on-line payment as well, as shown in FIG. 10e, since the user recognizes that the payment is carried out via integrated barcode payment, this indicates that the user is not required to input his or her credit card information.

FIG. 11a to FIG. 11e respectively illustrate on-screen display (OSD) screens through which the mobile device processes information on payments made by using the integrated barcode according to the embodiment of the present invention. Hereinafter, a user interface enabling the mobile service to list payment information by using the integrated barcode will be described in detail with reference to FIG. 11a to FIG. 11e.

First of all, as shown in FIG. 11a, an OSD screen indicating an "Expense Details" item at a lower right portion is displayed. However, the location of the item is merely exemplary. And, therefore, the color, size, or location of such item may be varied whenever required by the manufacturer or provider. If the "Expense Details" item is selected, as shown in FIG. 11a, 3 different items verifying the details on the payments made by using the integrated barcode may be simultaneously displayed, as shown in FIG. 11 b. If a "Monthly Expenses" item of FIG. 11b is selected, a list of items purchased and paid by using the integrated barcode during a specific month selected by the user is displayed, as shown in FIG. 11c.

Meanwhile, when the user selects a "Payment Details" item shown in FIG. 11b, a list of items purchased and paid by a specific payment means (e.g., mobile phone, credit card, etc.) selected by the user is displayed, as shown in FIG. 11 d. This process will be described in more detail with reference to FIG. 12. Furthermore, if the user selects a "Graphic Details (of Graph)" item shown in FIG. 11c, the monthly expenses paid by the user using the integrated barcode is displayed in the form of a graph. Evidently, the payments made by each payment means may also be shown in the form of a graph.

FIG. 12 illustrates a database (DB) of the mobile device according to the embodiment of the present invention, wherein the DB stores histories of payment made by each payment means for each address. In order to realize the example shown in FIG. 11d, the mobile device according to the embodiment of the present invention is designed to respectively store each payment detail made by each payment means in a different address of the database (DB). This process is shown in FIG. 12.

Accordingly, the user may be able to verify all payment details made by using the integrated barcode payment method. Moreover, in case the DB is designed as shown in FIG. 12, the user may be capable of verifying the payment details for each of the first payment means (e.g., mobile phone), the second payment means (e.g., credit card), and the third payment means (e.g., wire transfer), which are respectively mapped to the integrated barcode.

In the specification of the present invention, description is made on each embodiment of the present invention with reference to the respective appended drawings from FIG. 1 to FIG. 12 for simplicity. However, it will be apparent that another embodiment of the present invention can be realized by combining specific features of shown in the drawings. Additionally, a device invention and a method invention are both described in this specification of the present invention. Therefore, whenever required, the description of both inventions may be supplementary applied.

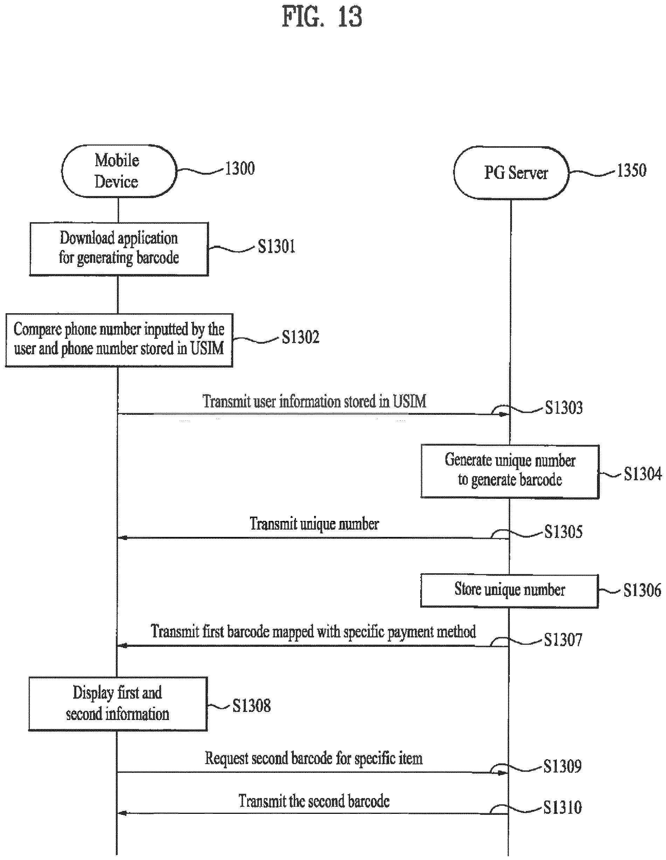

As described above, an integrated barcode system to map specific payment method was introduced with explanation of FIG. 1 through FIG. 12. Nevertheless, there are a lot of mobile discount coupon available out there being used by many people to pay less than the retail price. But, there is a problem with the conventional discount coupon system as conflict can occur depending on when the discount coupon is used and the time of the payment. For example, if payment of a discount coupon was processed on January 1, 2010, but the using of the discount coupon occurred in March 1, 2010. In such a case, the user is inconvenienced by the early payment and also the user may not be able to use to the discount coupon at all. Further, the user may need to print the discount coupon and carry it with him to use it. Therefore, from FIG. 13 to FIG. 23, detailed embodiments are described for resolving the conventional problem with the discount coupons. Moreover, from FIG. 13 to FIG. 23, the solution of using the discount coupon in a convenient and faster way is described, benefitting the user. In addition, the embodiments of FIG. 13 to FIG. 23 can be combined with FIG. 1 through FIG. 12 to implement the embodiments of the present invention in which all of the embodiments are within the scope of the present invention.

In FIG. 13 through FIG. 17, generating a second barcode for replacing a discount coupon is described in detail and the first embodiment will be described.

FIG. 13 is a flowchart illustrating an embodiment of the present invention where a second barcode is generated for discount coupon of mobile device and PG server.

To process a data in a system to implement a payment for at least one item, a mobile device 1300 and PG server 1350, for example, needs to be included. The mobile device 1300 downloads an application to generate a barcode using the address information S1301. For example, the access information for downloading the application to generate the barcode is transmitted from the PG server 1350 to the mobile device 1300. The access information can be information about download URL information.

The mobile device 1300 requests download from a specific application provider using the access information, and downloads the application to generate the barcode from the specific application provider. Detailed explanation was described above in FIG. 2 for better understanding.

The mobile device 1300 after downloading the application compares the mobile device phone number inputted by the user with the mobile device phone number stored in a Universal Subscriber Identity Module (USIM) S1302.

If the compared number is same, the mobile device 1300 transmits the user information stored in the USIM to the PG server 1350 (S1303). Therefore, unauthorized user will not be able to have access to generate a barcode.

The PG server 1350 generates a unique number S1304 for generating a barcode and transmits the generated unique number to the mobile device 1300 (S1305).

If the unique number is successfully received and stored in the mobile device 1300, the PG server 1350 confirms and stores the unique number S1306. Therefore, since there is no need to store card number or card password in the mobile device, chances of getting the mobile device hacked are low.

Data indicating a first barcode mapped with specific payment method is transmitted from the PG server 1350 to the mobile device 1300 (S1307).

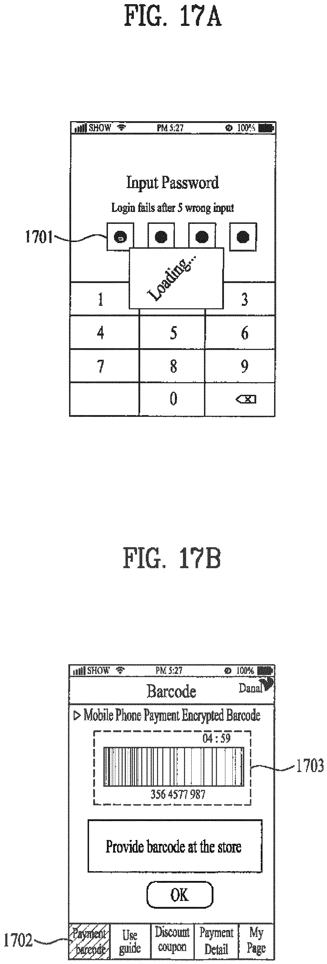

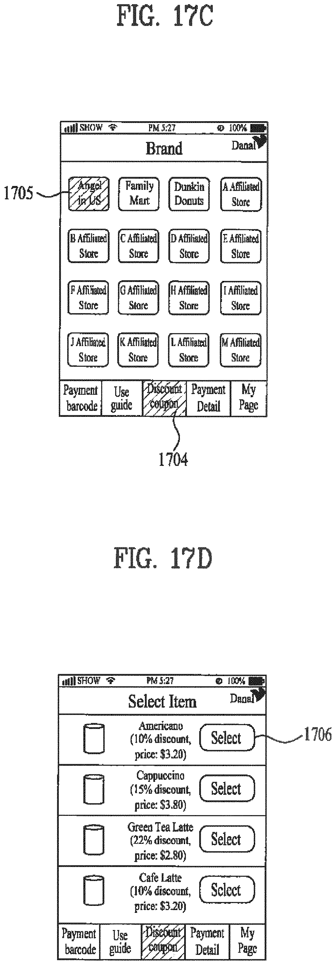

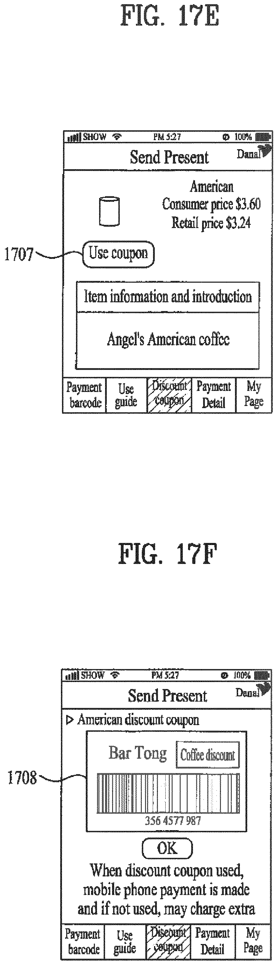

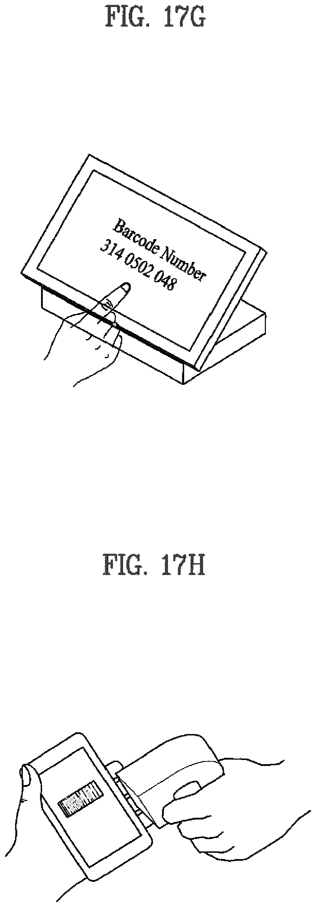

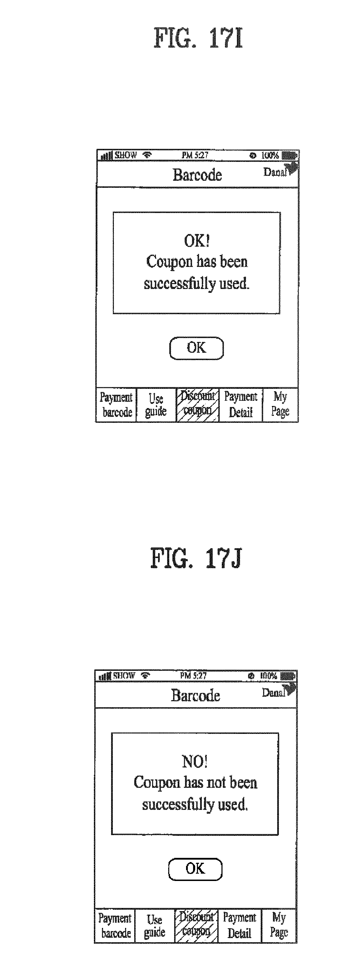

The mobile device 1300 displays in order, first information identifying at least one company and second information identifying at least one item S1308. Detailed explanation on GUI design will be discussed later on with FIG. 17.

The signal requesting data that indicates second barcode of the specific item is transmitted from the mobile device 1300 to the PG server 1350 (S1309).

Then, data that indicates the second barcode is transmitted from the PG server 1350 to the mobile device 1300 S1310. The second barcode, for example, includes discount information such as discounted price from the original price on specific item.

Therefore, unlike the conventional discount coupon system, the time of purchase and time of purchasing the discount coupon are the same in this embodiment. Moreover, a way of accessing a discount coupon on a specific item among the many discounted coupon when a user visits a store, will be explained.

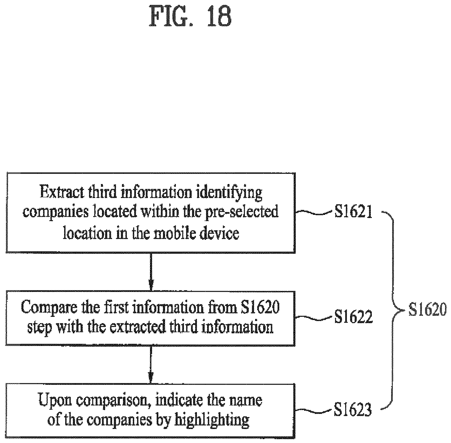

In another embodiment of the present invention, as explained above in step S1308, the mobile device 1300 extracts third information which involves accessing stores that are located near the current location of the mobile device, and from the extracted third information, the third location is compared with the first information and displays the stores or companies that matches. These steps will further be explained in detail with FIG. 18 through FIG. 21.

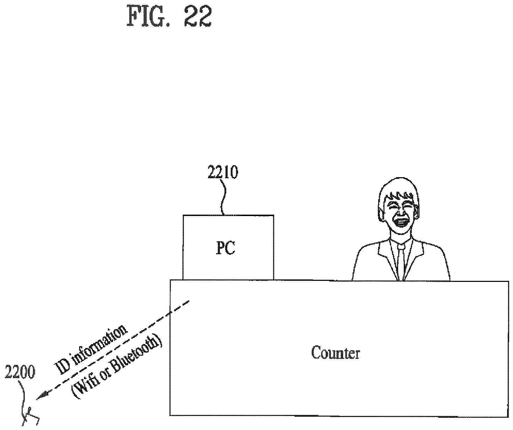

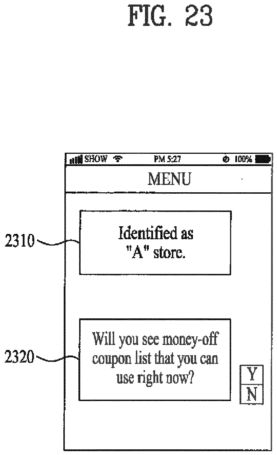

Furthermore, in another embodiment of the present invention, in the step S1308, the mobile device 1300 receives store identification (ID) through wireless devices located in the store, stops display of the first information on the mobile device explained above in S1308, and displays second information which corresponds to items received via the second information. These steps will be explained in detail with regard to FIG. 22 and FIG. 23.

Further, even it is not illustrated in FIG. 13, one of the scopes of the present invention is that the mobile device 1300 extracts the payment method information of the first barcode and discount price information on a specific item, combines the extracted specific payment method information and discounted price information on a specific item, an integrated barcode is generated.

The specific payment method may include mobile phone, credit card, wire transfer, and gift certificate among others. Since the solution involving selecting the specific payment method was explained above with regard to FIGs. 1 to 12, the steps will be omitted.

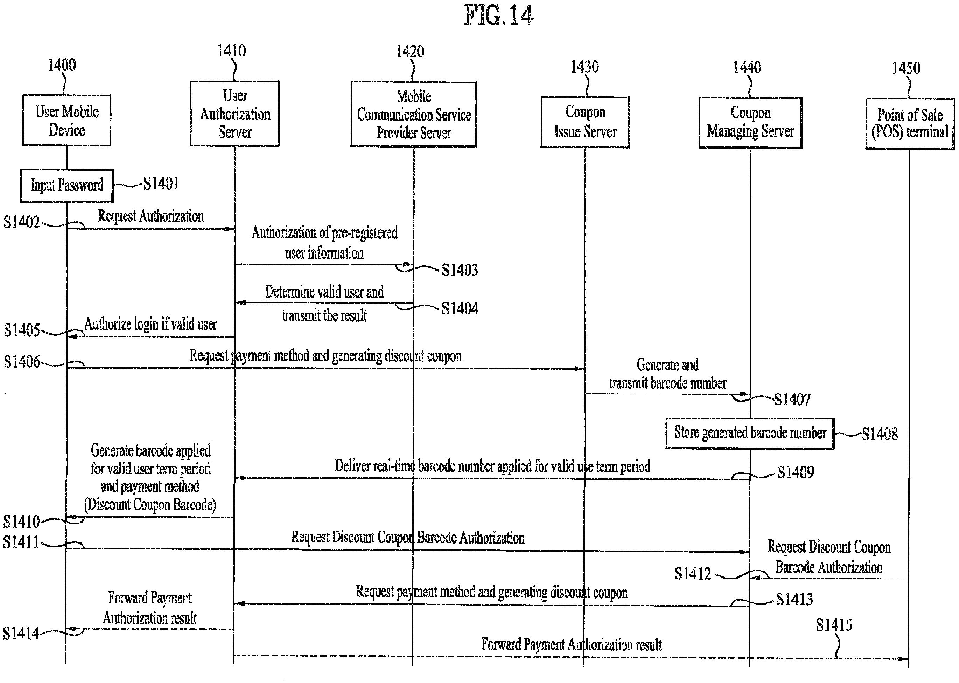

On the other hand, in FIG. 13 the mobile device and the server in which the mobile device had access to was presumed to be a single (one on one), however, in FIG. 14, it involves mobile communication service provider server, server involving coupon and other servers as well.

FIG. 14 illustrates another embodiment of the present invention, specifically, generating second barcode for discount coupon. The coupon issue server and coupon managing server can be combined as one coupon-related server and it is also within the bounds of the present invention, and further, the user authorization server can also perform the tasks of PG server and that can also be within the scope of the present invention.

The mobile device 1400 which already downloaded the application to generate a barcode according to the explanation made above with respect to FIG. 1 to FIG. 12, inputs the pre-stored user password S1401. Also, the mobile device 1400 transmits signal requesting barcode service authorization to the user authorization server 1410 (S1402). The user authorization server 1410 transmits pre-stored user information to mobile communication service provider server 1420 (S1403). The mobile communication service provider server 1420 compares the information received in S1403 with the user information stored in the database and determines the validity of the user and transmits the result to the user authorization server 1410 (S1404).

The user authorization server 1410 transmits the confirm signal to the mobile device 1400 if the user is determined to be a valid user and allows the user to login S1405. The mobile device 1400 then requests to the coupon issue server 1430 to generate second barcode for the discount coupon S1406. Even though it is not shown in FIG. 14, the data flow for processing the mapped payment method first barcode comes between the steps of S1405 and S1406, also within the scope of the present invention.

The coupon issue server 1430 generates the barcode and transmits to coupon managing server 1440 (S1407). The coupon managing server 1440 stores the newly generated barcode S1408, and delivers the validly applied time frame barcode to the user authorization server 1410 (S1409).

The user authorization server 1410 transmits to the mobile device 1400, a barcode that has both the payment method information and the valid time frame information S1410. However, in the S1410 step in FIG. 14 uses one barcode that includes the payment method information, the scope of the present invention also includes displaying a first barcode for payment and displaying a second barcode for discount coupon separately as well. As explained in S1410 of FIG. 14, by using one integrated barcode, it is faster to handle for the user's point of view.

The mobile device 1400 requests to POS terminal 1450 for certification of the discount coupon barcode S1411. In S1411, the implementation can be done by contacting the barcode displayed on the mobile device 1400 to the POS terminal 1450 so the POS terminal 1450 scans the barcode or inputting the barcode number displayed on the mobile device 1400 in the POS terminal 1450.

The POS terminal 1450 requests to the coupon managing server 1440 for authorization of the discount coupon barcode, and the coupon managing server 1440 determines whether the barcode is valid by using the data stored in S1408, and then transmits the result to the user authorization server 1410 (S1413). For example, if the time has lapsed for the coupon to be used, or the barcode is not valid, the barcode will not be authorized.

The user authorization server 1410 delivers the final authorization result to the mobile device 1400 S1414, and also to the POS terminal 1450 (S1415). The steps of S1414 and S1415 can occur simultaneously or in the reverse order. And that is also within the scopes of the present invention.

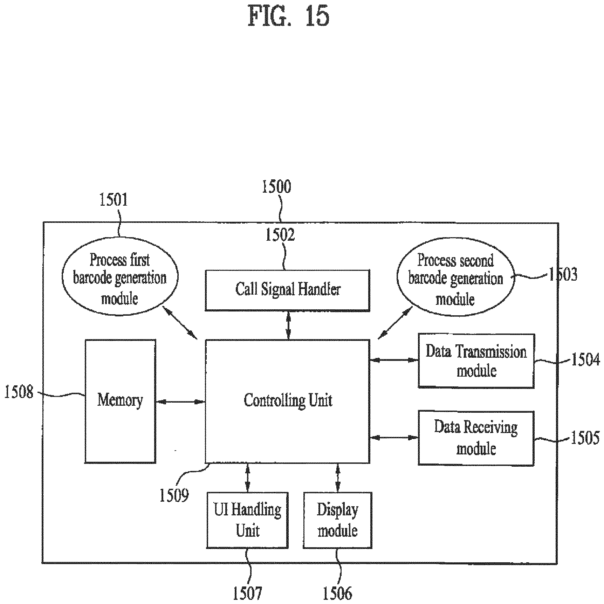

FIG. 15 illustrates the configuration module of the mobile device. As shown in FIG. 15, according to an embodiment of the present invention, mobile device 1500 may include process first barcode generation module 1501, call signal handler 1502, process second barcode generation module 1503, data transmission module 1504, data receiving module 1505, display module 1506, Ul handling unit 157, memory 1508, and controlling unit 1509.

The data receiving module 1505 receives data indicating first barcode which is mapped with the specific payment method from at least one of the outside server. And the data may be stored in the memory 1508 temporarily.

The display module 1506 displays first information where the first information involves identifying at least one companies providing the discount coupon, and also displays second information where the second information involves identifying at least one item applying the discount coupon from the companies providing such discount coupon. The specific companies and the specific items may be selected according to user command signal inputted through the UI handling unit 1507. Further, it is possible for a specific company to be automatically selected, and that process will be explained below.

The data transmitting module 1504 transmits signal requesting data for indicating second barcode to at least one outside server.

The data receiving module 1505 receives data indicating the second barcode. For example the second barcode may include discounted price information for a specific item and its original price.

Further the display module 1506 displays at least one of the first barcode or the second barcode. As explained, the specific payment method information included in the first barcode and the discount information for specific item included in the second barcode may be combined in to one integrated barcode and it is within the scope of the present invention. The data received is processed through first barcode generation module 1501 or the second barcode generation module 1503 and displayed through the display module 1506 via the controlling unit's control. The controlling unit may include CPU and it is within the scope of the present invention to combine the first and the second barcode generation module in to one module.

Even though it is not shown in FIG. 15, the mobile device 1500 may further include Global Positioning System (GPS) or Location Based Service (LBS) to process the data. The process will be explained in another embodiment of the present invention described below.

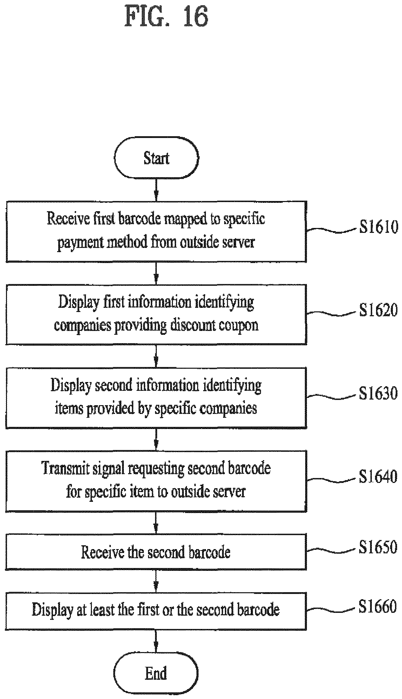

FIG. 16 is a flowchart illustrating controlling the mobile device according to an embodiment of the present invention.

The mobile device that processes data for payment on at least one item, receives data that indicate first barcode regarding the specific payment method from at least one outside server S1610. Further, it displays the first information identifying at least one company that provides discount coupon S1620.

Further, it displays second information which identifies at least one item that from the specified company that provides the discount coupon S1630. The signal requesting data indicating the second barcode with regard to the specific item is transmitted to at least one outside server S1640.

Then, the data indicating the second barcode is received S1650. The second barcode for example includes information on the discounted price as compared to the original price. Lastly, at least one of the first barcode or the second barcode is displayed S1660.

According to another embodiment of the present invention, before receiving data indicating first barcode from at least one outside server, the application for generating the barcode, and receiving unique number from the PG server, accessing unique number from the PG server if the login is valid, mapping the barcode with the unique number, displaying OSD the list of the payment method, and transmitting to the PG server, is included. In order to effectively process the steps, combining the phone number, user information, and the unique number given during running of the application stored in the USIM of the mobile device is within the scope of the present invention. Further, after displaying in S1660 step, applying timer for displaying, determining whether time for confirming payment has past or not, and disabling the first barcode in case of a delay, are also included in the steps.

The implementation of GUI will be explained in conjunction with FIG. 17 for processing the integrated barcode or the discount coupon in the mobile device as illustrated in FIG. 15 and FIG. 16.

FIGs. 17a-17j illustrates various GUI according to an embodiment of the present invention as to how the mobile device displays the use of the discount coupon.

First, as illustrated in FIG. 17a, login information is required to use the barcode. For example, as shown in FIG. 17a, a 4-digit number 1701 may be used for the password. However, other password input can be used as well. The present invention does not in any means limits the method of inputting the password.

As shown in FIG. 17b, if payment barcode option is selected 1702, a barcode mapped to the specific payment method is displayed 1703. The barcode 1703 can be used, however, according to another embodiment of the present invention as illustrated by FIG. 17c, user can select discount coupon option 1704 as well. As illustrated in FIG. 17c, the shops providing the discount coupon is displayed and the user can choose his or choice of the specific shop 1705.

As illustrated in FIG. 17d, the list of items applying the discount coupon in the specific shops are listed, and the user can choose the specific item by touching the specific item 1706. As shown in FIG. 17e, detail information regarding the specific item is displayed and the user can choose the discount coupon 1707. At this point, as illustrated in FIG. 17f, second barcode indicating the discount coupon is automatically displayed 1708. The second barcode 1708 may also include information regarding the first barcode indicating the specific payment method.

Therefore, the user may present the second barcode at the register in the shop. At this time as illustrated by FIG. 17g, the barcode number may be inputted to make payment or as illustrated in FIG. 17h, the payment may be processed by scanning the barcode from the mobile device.

When the payment has successfully been completed, a confirmation message may be displayed as shown in FIG. 17i. If the payment was not successful, an error message may be displayed as shown in FIG. 17j.

FIG. 18 to FIG. 21 illustrates the process where during generating second barcode, choosing a company that has a high probability of being chosen is described. In this embodiment, instead of the user manually choosing each companies or shops, the discount coupon is displayed according to the location of the mobile device.

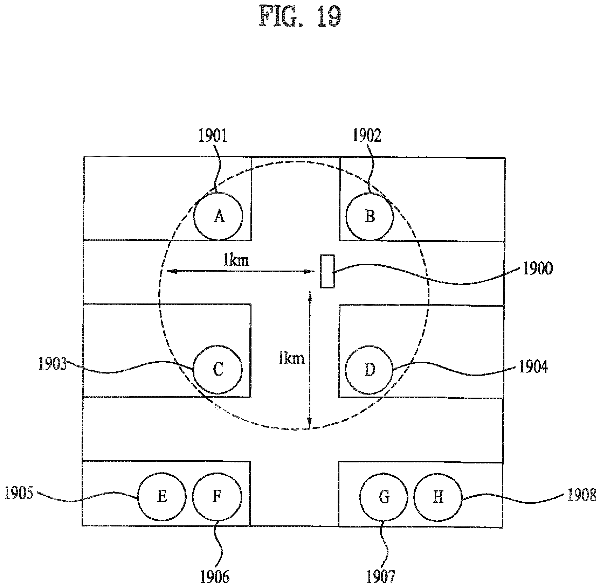

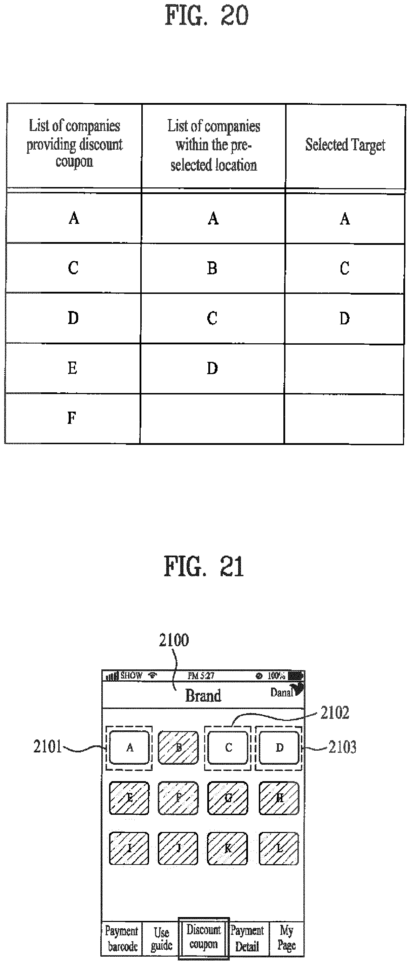

FIG. 18 is a flow chart illustrating the process of S1620 step of FIG. 16. FIG. 19 illustrates the details of the flow chart in FIG. 18. FIG. 20 illustrates the database showing the list of companies or shops providing the discount coupon. FIG. 21 is a GUI display of FIG. 18. Details will be now explained referring to FIG. 18 to FIG. 21.

According to another embodiment of the present invention, the mobile device extracts third information identifying the companies or shops that are located within the pre-selected boundary S1601. In case the mobile device includes a GPS service or a LBS service, as illustrated in FIG. 19, the location of the mobile device is known. For example, if the pre-selected boundary is 1 km, Shop A, B, C, and D are all within the selection and included in the third information.

The mobile device compares the extracted third information with the first information S1602. The first information includes information of shops providing discount coupon. For example, as illustrated in FIG. 20, if the shops providing discount coupon are shop A, C, D, E, and F and the shops within the pre-selected boundary are A, B, C, and D, only the shops that have high probability of getting chosen by the user is displayed, namely, A, C, and D. Then those information is displayed S1603, showing only the shops that have high probability of being chosen and they are displayed accordingly as shown in FIG. 21. Shop A 2101, Shop B, 2102, and Shop 3 2103. The list of shops providing discount coupon is listed as described in FIG. 17c. FIG. 21 indicates that list of shops that have high chance of getting chosen is displayed first for recommending to the user. The user may take advantage of this recommendation as it indicates shops near to the user's current location.

FIG. 22 and FIG. 23 illustrate another embodiment where second barcode replacing the discount coupon is used to recommend to the user for choosing specific shops.

When a user is inside a shop and executes the barcode service according to the present invention, there is a high chance of using a discount coupon issued by the shop that the user is in. Therefore, explanation on automatically choosing discount coupon will now be explained.

FIG. 22 illustrates how the mobile device detects the shop information. When a user enters the shop carrying the mobile device 2200, the host device 2210 in the shop, the device being PC, POS terminal, and others, the mobile device 2200 is able to communicate through Wifi, Bluetooth, and etc. Further the host device 2210 may send out signal regularly transmitting ID information of the shop to the mobile device 2200. Therefore, the mobile device 2200, when running the barcode and discount coupon service, may automatically be connected by detecting the host device 2200.

FIG. 23 illustrates the GUI display of FIG. 22. In this case, there is no need to go in to FIG. 17c or FIG. 21 where the mobile device generates the list of available shops or stores. The mobile device displays that company or store A is identified 2310. In order to reduce error and for security purposes, as shown in FIG. 23 2320, the mobile device requests confirmation to the user for using the discount coupon service.

Even though explanation of figures 1 through 23 were each illustrated to demonstrate its features, combining the features and implementing them are also within the scope of the present invention.

The method invention according to the present invention may be realized in a program command format that can be executed diverse computing means, so as to be recorded in a computer-readable medium. The computer-readable medium may include a program command, a data file, a data structure, or may include a combination of the program command, data file, and data structure. The program command that is recorded in the computer-readable medium may be specifically designed and configured for the present invention or may correspond to a medium that is available after being disclosed to a computer software provider or manufacturer. Herein, examples of the computer-readable recording medium may include magnetic media, such as hard disks, floppy disks, and magnetic tapes, optical media, such as CD-ROMs and DVDs, magneto-optical media, such as optical disks, and hardware devices that are specifically configured to store and execute program commands, such as ROMs, RAMs, and flash memories.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method of processing data for paying for at least one of item in a system having a Payment Gateway (PG) server and a mobile device:
downloading an application by using address information in a memory of the mobile device, wherein the application is used to process at least one of a barcode;
comparing first phone number with second phone number in the mobile device, wherein the first phone number is inputted by a user of the mobile device and the second phone number is stored in the Universal Subscriber Identity Module (USIM) of the mobile device;
transmitting user information stored in the USIM of the mobile device to the PG server if the first phone number is identical with the second phone number;
generating ID information for the user in the PG server, wherein the ID information is stored in a database of the PG server;
transmitting the generated ID information from the PG server to the mobile device;
transmitting first barcode from the PG server to the mobile device if the mobile device requests a barcode to the PG server, wherein the first barcode is mapped with first payment method;
displaying, in the mobile device, first data for indicating at least one of company providing a discount coupon and second data for indicating at least one of item from a specific company among the at least one of company;
transmitting request signal for second barcode from the mobile device to the PG server if a specific item is selected by the user of the mobile device; and
transmitting the second barcode from the PG server to the mobile device, wherein the second barcode includes discount information related to the selected specific item.

2. The method of claim 1, wherein the step of displaying further comprises:
extracting third data for indicating at least one of company, wherein the company is located within a boundary from a current position of the mobile device;
comparing the extracted third data with the first data; and
displaying a list of at least one of company, wherein the company in the list is included in both the first data and the third data.

3. The method of claim 1, further comprising:
receiving, in the mobile device, ID information for identifying a store if the mobile device is connected to a wireless system of the store;
controlling the mobile device to stop displaying the first data; and
displaying, in the mobile device, the second data for indicating at least one of item from the store.

4. The method of claim 1, wherein the second barcode further comprises payment method information.

5. The method of claim 1, wherein the payment method corresponds to the mobile device, a credit card, an account transfer or a gift certificate.

6. A mobile device for processing data for paying for at least one item, the mobile device comprising:
a receiving module configured to receive first barcode from a Payment Gateway (PG) server, wherein the first barcode is mapped with first payment method;
a displaying module configured to display first data for indicating at least one of company providing a discount coupon and second data for indicating at least one of item from a specific company among the at least one of company;
a user interface configured to select a specific item;
a transmitting module configured to transmit request signal for requesting second barcode corresponding to the selected specific item to the PG server; and
a controller configured to pay the selected specific item using the second barcode, wherein the second barcode includes discount information related to the selected specific item.

7. The mobile device of claim 6, wherein the controller further comprises a processor for extracting third data for indicating at least one of company, wherein the company is located within a boundary from a current position of the mobile device.

8. The mobile device of claim 7, wherein the processor corresponds to either a GPS (global positioning system) processor or a LBS (location based service) processor.

9. The mobile device of claim 7, wherein the processor further compares the extracted third data with the first data, and displays a list of at least one of company, wherein the company in the list is included in both the first data and the third data.

10. The mobile device of claim 6, wherein the receiving module receives ID information for identifying a store if the mobile device is connected to a wireless system of the store.

11. The mobile device of claim 10, wherein the controller controls the displaying module to stop displaying the first data, and to display the second data for indicating at least one of item from the store.

12. A method for processing payment information by using at least one of barcode in a mobile device, comprising:
downloading an application for processing at least one of barcode into a memory of the mobile device;
receiving ID information identifying an user of the mobile device from a Payment Gateway (PG) server, wherein the ID information is stored in a database of the PG server;
transmitting multiple data on specific payment method to the PG server;
receiving a barcode mapped with the specific payment method from the PG server only if log-in information is valid;
displaying the received barcode on a screen of the mobile device, wherein the received barcode is restricted for one-time use within a predetermined time period; and
controlling the restricted barcode to pay for an item.

13. The method of claim 12, the step of downloading further comprising:
accessing first Uniform Resource Locator (URL) address corresponding to first server if the mobile device is equipped with first Operating System (OS); and
accessing second URL address corresponding to second server if the mobile device is equipped with second OS.

14. The method of claim 12, wherein the ID information is generated based on a combination of user information stored in a USIM and serial number corresponding to the downloaded application.

15. The method of claim 12, wherein the step of receiving the ID information from the PG server performs after the PG server receives an approval message on the user from the mobile communication service provider.
